(19)

**Europäisches Patentamt**
**European Patent Office**
**Office européen des brevets**

(11) **EP 4 359 669 B1**

(12) **EUROPEAN PATENT SPECIFICATION**

(45) Date of publication and mention
of the grant of the patent:
**28.01.2026 Bulletin 2026/05**

(51) International Patent Classification (IPC):
**F03D 80/30** (2016.01)        **F03D 17/00** (2016.01)

(21) Application number: **22726592.3**

(52) Cooperative Patent Classification (CPC):
**F03D 80/30; F03D 17/00;** Y02E 10/72

(22) Date of filing: **20.05.2022**

(86) International application number:
**PCT/DK2022/050102**

(87) International publication number:
**WO 2022/268276 (29.12.2022 Gazette 2022/52)**

(54) **DETECTING LIGHTNING STRIKES ON A WIND TURBINE WITH IMPROVED RELIABILITY**

DETEKTIERUNG VON BLITZEINSCHLÄGEN IN EINE WINDENERGIEANLAGE MIT ERHÖHTER ZUVERLÄSSIGKEIT

DÉTECTION DES COUPS DE FOUDRE SUR UNE ÉOLIENNE AVEC FIABILITÉ ACCRUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2021 DK PA202170330**

(43) Date of publication of application:
**01.05.2024 Bulletin 2024/18**

(73) Proprietor: **VESTAS WIND SYSTEMS A/S**
**8200 Aarhus N (DK)**

(72) Inventors:
• **HALAJOVA, Zuzana**
**8200 Aarhus N (DK)**
• **VESTERGAARD, Markus Mester**
**8200 Aarhus N (DK)**

(74) Representative: **Vestas Patents Department**
**Hedeager 42**
**8200 Aarhus N (DK)**

(56) References cited:
DE-A1- 102015 200 163     US-A1- 2011 118 982
US-B2- 9 835 141

## Description

## Technical Field

This invention relates generally to wind turbines, and more particularly to detection of lightning strikes on a wind turbine based on data from multiple independent detection channels.

## Background

Because of their height above the local terrain or sea level, and their location in open areas having frequent winds, wind turbines are exposed to a high probability of being struck by lightning. Since the highest point of a wind turbine is normally provided by one of the rotor blades, rotor blades typically receive most of the lightning strikes received by the wind turbine. Wind turbine blades often include lightning protection systems that are designed to receive lightning strikes and conduct them safely to ground without damaging the blades or other wind turbine components. Nevertheless, due to the high amount of energy associated with lightning strikes, as well as their unpredictable nature, a lightning strike can damage the wind turbine despite the presence of a protection system. Blades are particularly susceptible to lightning, and continued operation of a wind turbine with a damaged blade can lead to further damage of both the blade and other components of the wind turbine, e.g., due to imbalances in the rotor. Thus, in response to detecting a lightning strike at a wind turbine, operation of the wind turbine may be reduced or curtailed until the wind turbine can be inspected for damage.

There is a tradeoff between the sensitivity of conventional wind turbine lightning detectors and the number of false detections of a damaging lightning strike at the wind turbine. If the detector is not sensitive enough, a lightning strike that damages a blade or another part of the wind turbine may go undetected, and the wind turbine further damaged though continued operation. On the other hand, if the lightning detector is too sensitive, it may cause false alarms that unnecessarily shut down the wind turbine until an inspection can be made. Because wind turbines are often located in remote areas, such as in offshore locations, inspections may be both infrequent and costly. In either case, unreliable detection of damaging lightning strikes can result in increased costs due to additional damage from continued operation, or from lost revenue due to unnecessary downtime and inspections. A known lightning detection system is disclosed in US 2011/118982 A1.

Thus, there is a need for improved methods, systems, and software products for reliably detecting lightning strikes on wind turbines.

## Summary

In an embodiment of the invention, a system for monitoring a wind turbine according to claim 1 is provided. The system includes one or more processors, and a memory coupled to the one or more processors. The memory includes program code that, when executed by the one or more processors, causes the system to receive first data from a lightning measurement system indicative of an occurrence of a lightning strike at the wind turbine, and receive second data from a lightning geolocation system indicative of the occurrence of the lightning strike that satisfies at least one criterion. In response to receiving both the first data indicative of the occurrence of the lightning strike at the wind turbine and the second data indicative of the occurrence of the lightning strike that satisfies the at least one criterion, the program code causes the system to transmit an alert indicating detection of the lightning strike at the wind turbine.

In an aspect of the invention, the at least one criterion may include a requirement that a time of occurrence of the lightning strike indicated by the second data be within a time threshold of the time of occurrence of the lightning strike indicated by the first data.

In another aspect of the invention, the at least one criterion may include a requirement that a location of the lightning strike indicated by the second data be within a distance threshold of the location of the wind turbine.

According to the invention, the lightning measurement system includes a lightning receptor configured to receive the lightning strike at the wind turbine, a down conductor that operatively couples the lightning receptor to an electrical ground, and a lightning sensor operatively coupled to the down conductor that detects the lightning strike based on a current conducted by the down conductor.

In another aspect of the invention, the lightning sensor may include at least one of a Rogowski coil and a magnetometer.

According to the invention, the lightning measurement system determines the occurrence of the lightning strike based on one or more of a peak current, a total energy, a total electrical charge, a current rise time, and a rate of change in the current.

According to the invention, the program code further causes the system to determine an intensity threshold based at least in part on one or more of the peak current, the total energy, the total electrical charge, the current rise time, and the rate of change in the current, and the at least one criterion includes a requirement an intensity of the lightning strike indicated by the second data be above the intensity threshold.

In another embodiment of the invention, a method of monitoring a wind turbine according to claim 5 is provided.

The method includes receiving the first data from the lightning measurement system indicative of the occurrence of the lightning strike at the wind turbine, receiving the second data from the lightning geolocation system indicative of the occurrence of the lightning strike that satisfies the at least one criterion, and in response to receiving both the first data indicative of the occurrence of the lightning strike at the wind turbine and the second data indicative of the occurrence of the lightning strike that satisfies the at least one criterion, transmitting the alert indicating detection of the lightning strike at the wind turbine.

According to the invention, the lightning measurement system includes the lightning sensor operatively coupled to the lightning receptor by the down conductor, and the method further includes receiving the lightning strike by the lightning receptor at the wind turbine, and detecting the lightning strike by the lightning sensor based on the current conducted by the down conductor.

According to the invention, the lightning measurement system determines the occurrence of the lightning strike based on one or more of the peak current, the total energy, the total electrical charge, the current rise time, and the rate of change in the current, and the method further includes determining the intensity threshold based at least in part on the one or more of the peak current, the total energy, the total electrical charge, the current rise time, and the rate of change in the current, and the at least one criterion includes the requirement the intensity the lightning strike indicated by the second data be above the intensity threshold.

In another embodiment of the invention, a computer program product according to claim 8 is provided. The computer program product includes a non-transitory computer-readable storage medium and program code stored on the non-transitory computer-readable storage medium. The program code is configured so that, when it is executed by one or more processors, the program code causes the one or more processors to receive the first data from the lightning measurement system indicative of the occurrence of the lightning strike at the wind turbine, receive the second data from the lightning geolocation system indicative of the occurrence of the lightning strike that satisfies the at least one criterion, and in response to receiving both the first data indicative of the occurrence of the lightning strike at the wind turbine and the second data indicative of the occurrence of the lightning strike that satisfies the at least one criterion, transmit the alert indicating detection of the lightning strike at the wind turbine.

The above summary presents a simplified overview of some embodiments of the invention to provide a basic understanding of certain aspects of the invention discussed herein. The summary is not intended to provide an extensive overview of the invention, nor is it intended to identify any key or critical elements, or delineate the scope of the invention. The sole purpose of the summary is merely to present some concepts in a simplified form as an introduction to the detailed description presented below.

## Brief Description of the Drawings

The accompanying drawings, which are incorporated in and constitute a part of this specification, illustrate various embodiments of the invention and, together with the general description of the invention given above, and the detailed description of the embodiments given below, serve to explain the embodiments of the invention.

Fig. 1 is a perspective view of an exemplary wind turbine in accordance with an embodiment of the invention including a lightning measurement system.

Fig. 2 is a diagrammatic view of an exemplary operating environment for the wind turbine of Fig. 1 including a lightning detection server that receives data from the lightning measurement system and a lightning geolocation system.

Fig. 3 is a flowchart of a process for detecting a lightning strike at the wind turbine of Figs. 1 and 2.

Fig. 4 is a flowchart of another process for detecting a lightning strike at the wind turbine of Figs. 1 and 2.

Fig. 5 is a diagrammatic view of a computer that may be used to implement one or more of the systems or processes depicted in Figs. 1-4.

It should be understood that the appended drawings are not necessarily to scale, and may present a somewhat simplified representation of various features illustrative of the basic principles of the invention. The specific design features of the sequence of operations as disclosed herein, including, for example, specific dimensions, orientations, locations, and shapes of various illustrated components, may be determined in part by the particular intended application and use environment. Certain features of the illustrated embodiments may have been enlarged or distorted relative to others to facilitate visualization and a clear understanding.

## Detailed Description

Embodiments of the invention are directed to systems, methods, and computer program products for detecting and characterizing lightning strikes at, or proximate to, a wind turbine. Data from at least two independent lightning detection systems, e.g., a local detection system and a global detection system, is analyzed to determine if lightning has struck a specific wind turbine. This data may also be used to characterize the lightning strike in terms of its potential to cause damage to the wind turbine in question.

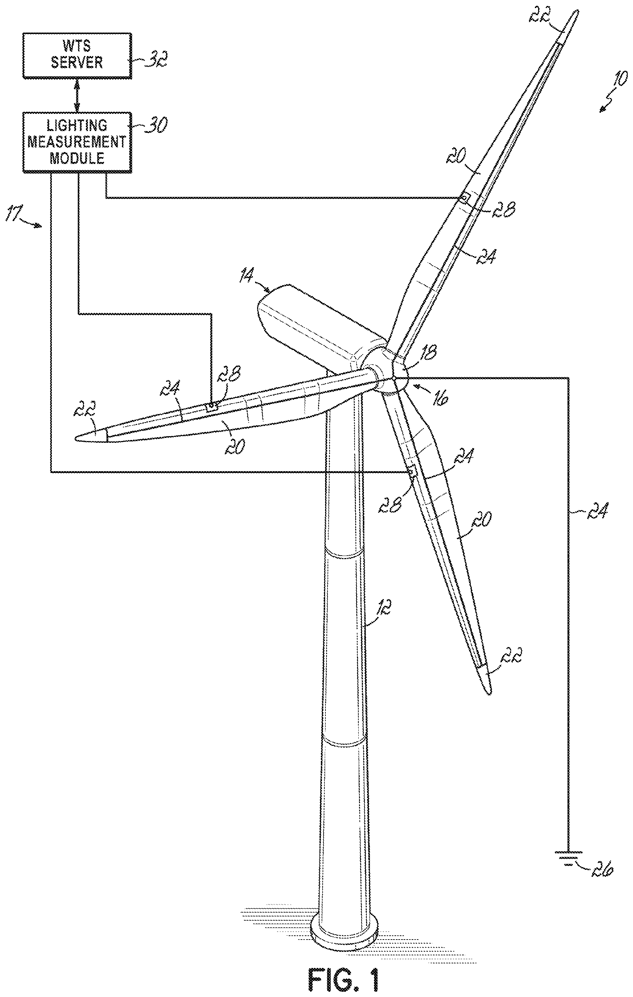

Fig. 1 illustrates an exemplary wind turbine 10 in accordance with an embodiment of the invention. The wind turbine 10 includes a tower 12, a nacelle 14 disposed at the apex of the tower 12, a rotor 16 operatively coupled to a generator in the nacelle 14, and a lightning measurement system 17. In addition to the generator, the nacelle 14 typically houses various components needed to convert wind energy into electrical energy and needed to operate and optimize the performance of the wind turbine 10. The tower 12 supports the load presented by the nacelle 14, rotor 16, and other wind turbine components housed inside the nacelle 14. The tower 12 of wind turbine 10 elevates the nacelle 14 and rotor 16 to a height above ground or sea level that allows the rotor 16 to spin freely and at which air currents having lower turbulence and higher velocity are often found.

The rotor 16 includes a hub 18 and one or more (e.g., three) blades 20 attached to the hub 18 at locations distributed about the circumference thereof. The blades 20 project radially outward from the hub 18, and are configured to interact with passing air currents to produce rotational forces that cause the hub 18 to spin about its longitudinal axis. This rotational energy is delivered to the generator housed within the nacelle 14 and converted into electrical power. To optimize performance of the wind turbine 10, the pitch of blades 20 may be adjusted by a pitch system in response to wind speed and other operational conditions.

The lightning measurement system 17 may include one or more lightning receptors 22, down conductors 24, lightning sensors 28, and a lightning measurement module 30. The lightning receptors 22 may be made from a suitable conductive material (e.g., copper) and located on various portions of the blade 20. Suitable locations for the lightning receptors 22 may include the blade tip (shown), as well as along the length of the blade, such as on one or more of the leading edge, trailing edge, leeward surface, and windward surface of the blade 20. Lightning receptors 22 may also be located on the tower 12, nacelle 14, hub 18, or any other component of the wind turbine 10 that may be struck by lightning. Each of the lightning receptors 22 may be operatively coupled to a down conductor 24. Each down conductor 24 may also be made from suitable conductive material (e.g., copper), and operatively couple one or more of the lightning receptors 22 to ground 26.

One or more of the down conductors 24 (e.g., the down conductor 24 of each blade 20) may be monitored by a lightning sensor 28. The lightning sensor 28 may include a Rogowski coil, a magnetometer, or any other suitable device for detecting current flowing through the down conductor 24 and outputting a signal indicative of a characteristic of the current. Rogowski coil based sensors may include a helical coil wrapped around a straight portion of the down conductor 24 in which current is to be measured. Magnetometers may utilize a magnetooptical effect (e.g., the Faraday's effect), and output a signal correlated to a rate of change of magnetic flux due to electrical current flow.

Each of the lightning sensors 28 may be operatively coupled to the lightning measurement module 30.

The lightning measurement module 30 may receive signals from the lightning sensors 28 and convert the received signals into a suitable format for transmission to a wind turbine system (WTS) server 32 or other suitable computer system. For example, the lightning measurement module 30 may generate data indicative of one or more characteristics of the sensed current, such as amplitude verse time, and transmit this data to the WTS server 32. The WTS server 32 may receive and store data received from multiple wind turbines 10, and may provide additional functions related to managing operation of the wind turbines 10 to which it is operatively coupled. Lightning measurement and protection systems for wind turbines are described in detail by U.S. Patent Nos. 9,450,392 issued September 20, 2016, and 9,835,141 issued December 5, 2017, the disclosures of which are each incorporated by reference herein in their entireties.

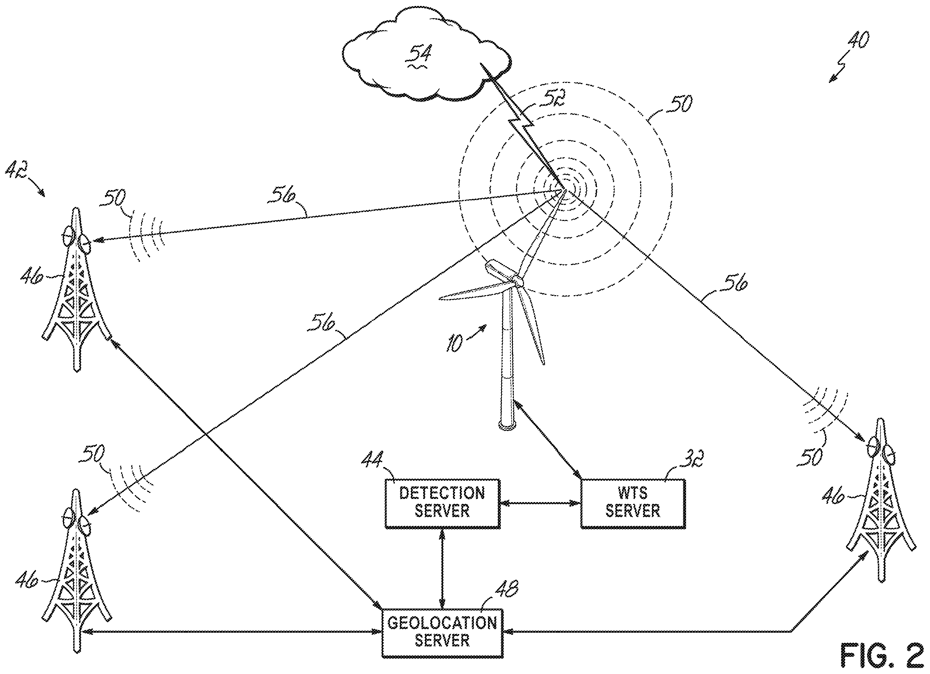

Fig. 2 depicts an exemplary operating environment 40 including the wind turbine 10 and WTS server 32, a lightning geolocation system 42, and a detection server 44. The lightning geolocation system 42 may comprise a network of lightning detection stations 46 in communication with a geolocation server 48. The various communication links depicted between the wind turbine 10, WTS server 32, detection server 44, lightning detection stations 46, and geolocation server 48 may be provided by any suitable communication channel, including, but not limited to, a data network such as a local area network, a wide area network, or a public network, e.g., the Internet.

Each of the lightning detection stations 46 may be configured to receive electromagnetic pulses 50 generated by a lightning strike 52. Each lightning detection station 46 may transmit information indicative of one or more characteristics of electromagnetic pulses 50 received at the lightning detection station 46 to the geolocation server 48. These characteristics may include a direction from which and time at which the pulse was received, intensity, duration, waveform shape, frequency content, etc. The lightning detection station 46 may transmit this information to the geolocation server 48 periodically, e.g., each time an electromagnetic pulse 50 characteristic of a lightning strike is received by the lightning detection station 46. The geolocation server 48 may then use radio direction-finding techniques (e.g., triangulation or trilateration) to determine the geolocation and other characteristics of the lightning strike 52.

The lightning strike 52 may be an electrical discharge between a cloud 54 and the ground or wind turbine 10 that generates one or more electromagnetic pulses 50. These electromagnetic pulses 50 may be detected by one or more of the lightning detection stations 46. The lightning detection stations 46 may be distributed tens to hundreds, or even thousands, of kilometers apart. While only three lightning detection stations 46 are shown, it should be understood that the lightning geolocation system 42 may include any number of lightning detection stations 46.

Each lightning detection station 46 may include an antenna designed to couple a portion of the electromagnetic pulses 50 to a radio receiver. The radio receiver may then generate data representative of the characteristics of the electromagnetic pulses 50, referred to as electromagnetic pulse data. Electromagnetic pulse data may include, but is not limited to, amplitude, polarity, direction, and time of reception of the electromagnetic pulses 50. The electromagnetic pulses 50 generated by the lightning strike 52 may propagate radially outward from the lightning strike 52, and thus reach the lightning detection stations 46 at varying times depending on the distance 56 of the lightning detection station 46 from the location of the lightning strike 52.

The geolocation server 48 may analyze differences in arrival time or direction of arrival of electromagnetic pulses 50 received from the lightning strike 52 at two or more lightning detection stations 46. The geolocation server 48 may then determine a location of the lightning strike 52 based on the location of each of the lightning detection stations 46 and one or more of the time of arrival and direction data of the electromagnetic pulses 50. The geolocation server 48 may also determine an intensity of each lightning strike 52. The intensity of the lightning strike 52 may be determined, for example, based on the intensity of the electromagnetic pulse 50 received at the lightning detection station 46 and the square of the distance 56 between the station and the lightning strike 52. To facilitate determining the location of a lightning strike, the lightning detection stations 46 and geolocation server 48 may have a common time reference (e.g., a GPS signal) that enables accurate calculation of time differences. Lightning geolocation systems are described in detail by U.S. Patent No. 10,649,018, issued May 12, 2020, the disclosure of which is incorporated by reference herein in its entirety.

The lightning geolocation system 42 may be operated by the wind turbine operator, or some other entity, such as a national weather service. Lightning detector networks are often used by meteorological services such as the National Weather Service in the United States, the Meteorological Service of Canada, the European Cooperation for Lightning Detection (EUCLID), the Institute for Ubiquitous Meteorology (Ubimet) and by other organizations like electrical utilities and forest fire prevention services. For example, in the United States, cloud-to-ground (CG) and intra-cloud (IC) lightning is detected and mapped in real-time by the National Lightning Detection Network (NLDN), a system owned and operated by Vaisala Inc. of Louisville Colorado, United States, and the Earth Networks Total Lightning Network, a system owned and operated by Earth Networks of Germantown, Maryland, United States. In an embodiment of the invention, the detection server 44 may receive data from a third-party detection network such as those described above, and compare this data to lightning strike data received from the WTS server 32. This data may be received, for example, through an Application Programming Interface (API).

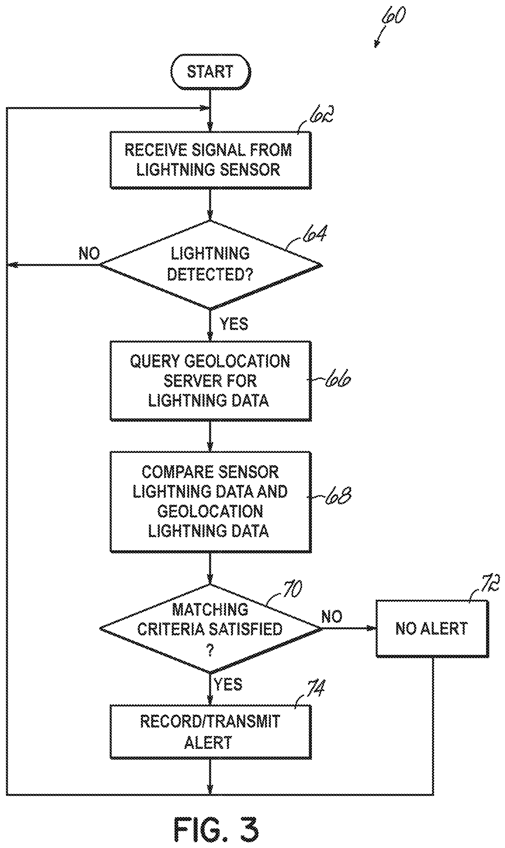

Fig. 3 depicts a flowchart illustrating an exemplary process 60 in accordance with an embodiment of the invention that may be executed by one or more of the WTS server 32, detection server 44, or other suitable computing system to determine if the wind turbine 10 has been struck by lightning.

In block 62, the process 60 may receive a signal from a lightning sensor 28 indicative of a current pulse in a corresponding down conductor 24 of wind turbine 10. The signal may include, or be analyzed to determine, one or more characteristics of the current pulse. These characteristics may include a peak current $I_P$, a total energy $E_P$, a total electrical charge $C_P$, a current rise time $t_R$, a rate of change in the current $dI/dt$, or any other characteristic of the current pulse. In cases where the current pulse is generated by a lightning strike, these characteristics may correspond to like characteristics of the lightning strike itself. The lightning measurement module 30 may also add data indicative of which component received the lightning strike (e.g., which blade of the wind turbine), and an absolute time each datapoint was measured. This data may be useful, for example, in both correlating the lightning strike with data received from the geolocation server 48, and in guiding later damage inspections should one be deemed necessary.

In response to receiving the signal from the lightning sensor 28, the process 60 may proceed to block 64 and determine if a lightning strike has occurred. Lightning may be detected if the current pulse matches or otherwise satisfies a predetermined set of lightning detection criteria. For example, if one or more characteristics of the current pulse exceeds a threshold indicative of a lightning strike. Thresholds may be set based on the lightning environment in which the turbine operates 10, e.g., to a percentage of the value of the characteristic for an average lightning strike at the wind turbine 10. Thresholds may also be set so that lightning strikes 52 are not detected unless they are considered sufficiently intense to produce a material risk of damage to the wind turbine 10.

Cloud-to-ground lightning may be positive or negative. Negative lightning transfers a negative charge from the cloud to ground. That is, electrons travel downward along the lightning channel from the cloud to the ground. With positive lightning, electrons travel upward along the lightning channel so that a positive charge is transferred from the cloud to the ground. Positive lightning is less common than negative lightning, and on average makes up less than 5% of all lightning strikes. Each lightning strike may include multiple individual strokes of lightning, with each stroke separated in time from the next by an amount of time on the order of tens of milliseconds, e.g., an average of 40-50 milliseconds.

By way of example, an average return stroke of a negative cloud-to-ground lightning strike may have a rise time $t_R$ of 1-10 microseconds, an average current of 30,000 amps, a peak current of 120,000 amps, deliver 15 coulombs of electric charge, and deliver one gigajoule of energy. For this type of lightning strike, exemplary detection thresholds may be set to:

$$t_R \leq 100 \ \mu S$$

$$I_A \geq 300 \ A$$

$$I_P \geq 1200 \ A$$

$$\frac{dI}{dt} \geq 10 \ kA/\mu S$$

$$E_P \geq 10 \times 10^6 \ J$$

$$C_P \geq 15 \times 10^{-3} \ C$$

Positive lightning strikes are typically more intense than negative lightning strikes. A stroke of a positive lightning strike for the above exemplary lightning environment may have an average current of 120,000 amps, a peak current of 400,000 amps, and deliver 350 coulombs of charge. Positive ground strokes with high peak currents are also commonly followed by long continuing currents. Accordingly, thresholds for detecting lightning strikes may be set to different levels depending on the polarity of the current detected in the down conductor 24. Thresholds may also take into consideration changes in measured rise times and currents due to the impedance of the down conductor 24. Detection of a lightning strike may require a combination of thresholds being exceeded (e.g., both average current and energy thresholds exceeded), or a single threshold (e.g., peak current threshold exceeded). How many thresholds must be exceeded to indicate a lightning strike may also depend in part on how much each threshold is exceeded.

If a lightning strike is not detected ("NO" branch of decision block 64), the process 60 may return to block 62 and wait to receive another signal from one or more of the lightning sensors 28. If a lightning strike is detected ("YES" branch of decision block 64), the process 60 may proceed to block 66 and query the geolocation server 48 for lightning data. The query may be limited to lightning data having a geolocation within a certain radius of the wind turbine 10, a time of occurrence within a certain time window centered on the time of detection at the wind turbine 10, or that satisfies both a geographic radius and a time of occurrence window. The size of each search window (geolocation and time) may depend in part on the expected accuracy of the geolocation data. Typical search windows may be for lightning strikes within 5,000 meters of the wind turbine location, and plus-or-minus 120 seconds from the time of the detected lightning strike at the wind turbine 10. Other search windows may include distance windows of 2,000, 1,000, 500, 200, and 100 meters from the wind turbine 10, and time windows of plus-or-minus 60, 30, 15, 10, 5, and 2 seconds from the time the lightning strike 52 at the wind turbine 10 was detected.

In response to receiving lightning data from the geolocation server 48, the process may proceed to block 68 and compare this data to the lightning data received from the lightning measurement system 17. In particular, the process 60 may compare the location of the wind turbine 10 in question to the geolocation of any lightning strikes indicated by the lightning data returned from the geolocation server 48. The process 60 may also compare time stamps for the lightning data received from the lightning measurement system 17 to time stamps for the lightning data received from the geolocation server 48. Matching criteria for comparing lightning data may include a distance threshold and a time threshold. These thresholds may be similar to those used for the search windows. Exemplary distance thresholds may include, but are not limited to, one or more of 5,000, 2,000, 1,000, 500, 200, and 100 meters between the geolocation of the lightning strike detected by lightning geolocation system 42 and the location of the wind turbine 10. Exemplary time thresholds may include, but are not limited to, plus-or-minus 120, 60, 30, 15, 10, 5, and 2 seconds between the time of the lightning strike detected by lightning geolocation system 42 and the time of the lightning strike 52 detected by the lightning measurement system 17.

If the matching criteria are not satisfied ("NO" branch of decision block 70), the process 60 may proceed to block 72, determine that no alarm is to be generated for the wind turbine 10, return to block 62, and continue monitoring for lightning strikes. If the matching criteria is satisfied ("YES" branch of decision block 70), the process 60 may proceed to block 74 and record, transmit, or both record and transmit an alert indicating a lightning strike has occurred at the wind turbine 10.

The alert/record may include information regarding when the strike occurred, the intensity of the strike, and the identity of the wind turbine and component involved. The alert/record may thereby facilitate an inspection of the wind turbine for damage. The type of alert issued may vary depending on the matching criteria satisfied. For example, if the lightning data from the geolocation server 48 identifies a lightning strike within a narrow time window (e.g., plus-or-minus 60 seconds) and within a short distance threshold (e.g., 2,000 meters) of a strike detected at the wind turbine 10, the process 60 may issue a "red alert". A red alert may indicate a high probability of a damaging lightning strike at the wind turbine 10. In contrast, if the lightning data from the geolocation server 48 identifies a lightning strike within the short distance threshold, but not within a time window of any strikes detected at the wind turbine 10, the process 60 may issue a "yellow alert". A yellow alert may indicate a relatively lower probability of a lightning strike, but one that warrants an inspection at the next scheduled visit. A "blue alert" may indicate detection of a lightning strike at the wind turbine 10 that is not confirmed by detection of a lightning strike by the lightning geolocation system 42 that falls within either the time or distance window criteria.

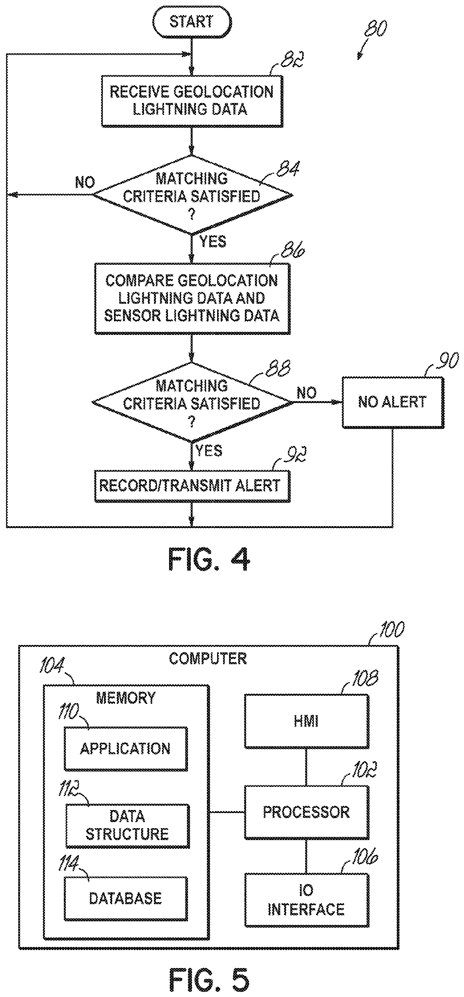

Fig. 4 depicts a flowchart illustrating an exemplary process 80 in accordance with an another embodiment of the invention that may be executed by one or more of the WTS server 32, detection server 44, or other suitable computing system to determine if the wind turbine 10 has been struck by lightning.

In block 82, the process 80 may receive lightning data from the lightning geolocation system 42. The data may be received as a continuous or regularly transmitted data stream, or as a response to a query from the detection server 44. In response to receiving the data, the process 80 may proceed to block 84 and determine if the geolocation of any lightning strikes identified by the data matches one or more criteria for issuing an alert. For example, were any lightning strikes detected within a predetermined threshold distance of a wind turbine 10. The size of the predetermined threshold distance may depend in part on one or more of the expected accuracy of the geolocation data, the intensity of the lightning strike, and on the wind turbine in question.

Characteristics of a wind turbine 10 that may affect the threshold distance selected may include the height of the wind turbine 10 above the average terrain in the area, the proximity of the wind turbine 10 to other wind turbines, the robustness of the wind turbine to lightning strikes, a historical frequency with which the wind turbine 10 is struck or damaged by lightning, or any other suitable characteristic. A typical distance threshold may consider lightning strikes detected within 100, 200, 500, 1,000, 2,000, or 5,000 meters of the wind turbine location as satisfying an alert criterion, although embodiments of the invention are not limited to any particular threshold distance.

If no lightning strikes have occurred that match the alert criteria of a wind turbine ("NO" branch of decision block 84), the process 84 may return to block 82 and continue monitoring lightning data from the lightning geolocation system 42. If matching criteria for a wind turbines is satisfied ("YES" branch of decision block 84), the process 60 may proceed to block 86 and compare the matching geolocation lightning data with any relevant sensor lightning data received by the detection server 44.

In block 88, the process 80 may compare the geolocation lightning data with sensor lightning data from the one or more wind turbines identified in block 84. If none of the geolocation lightning data satisfies matching criteria for a wind turbine ("NO" branch of decision block 88), the process 80 may proceed to block 90 and determine that no alerts should be issued. The process 80 may then return to block 82 and continue monitoring geolocation lightning data. If any of the geolocation lightning data satisfies matching criteria for a wind turbine ("YES" branch of decision block 88), the process 80 may proceed to block 92, record, transmit, or both record and transmit an alert indicating a lightning strike has occurred at the wind turbine or turbines having matching criteria. The process 80 may then return to block 82 and continue monitoring the geolocation lightning data.

Referring now to Fig. 5, embodiments of the invention described above, or portions thereof, may be implemented using one or more computer devices or systems, such as exemplary computer 100. The computer 100 may include a processor 102, a memory 104, an input/output (I/O) interface 106, and a Human Machine Interface (HMI) 108. The processor 102 may include one or more devices that manipulate signals based on operational instructions that are stored in memory 104. The processor 102 may execute computer program code embodied as one or more applications 110 residing in memory 104. One or more data structures 112 may also reside in memory 104, and may be used by the processor 102 or application 110 to store or manipulate data.

The I/O interface 106 may provide a machine interface that operatively couples the processor 102 to other devices and systems. The application 110 may thereby work cooperatively with one or more external resources to provide the various features, functions, applications, processes, or modules comprising embodiments of the invention. The HMI 108 may be operatively coupled to the processor 102 of computer 100 to allow a user to interact directly with the computer 100. To this end, the HMI 108 may include output devices capable of providing data to the user, and input devices capable of accepting input from the user.

A database 114 may reside in memory 104, and may be used to collect and organize data used by the various systems and modules described herein. The database 114 may include data and supporting data structures that store and organize the data. A database management system in the form of an application executing on the processor 102 may be used to access the information or data stored in records of the database 114 in response to a query.

In general, the routines executed to implement the embodiments of the invention, whether implemented as part of an operating system or a specific application, component, program, object, module or sequence of instructions, or a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations or elements embodying the various aspects of the embodiments of the invention.

The program code embodied in any of the applications/modules described herein is capable of being individually or collectively distributed as a computer program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of data.

In certain alternative embodiments, the functions, acts, or operations specified in the flowcharts, sequence diagrams, or block diagrams may be re-ordered, processed serially, or processed concurrently consistent with embodiments of the invention. Moreover, any of the flowcharts, sequence diagrams, or block diagrams may include more or fewer blocks than those illustrated consistent with embodiments of the invention. It should also be understood that each block of the block diagrams or flowcharts, or any combination of blocks in the block diagrams or flowcharts, may be implemented by a special purpose hardware-based system configured to perform the specified functions or acts, or carried out by a combination of special purpose hardware and computer instructions.

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the invention as defined in the claims.

**Claims**

1. A system for monitoring a wind turbine (10), comprising:

    one or more processors (102); and
    a memory (104) coupled to the one or more processors (102) and including program code (110) that, when executed by the one or more processors (102), causes the system to:

        receive first data from a lightning measurement system (17) indicative of an occurrence of a lightning strike (52) at the wind turbine (10);
        receive second data from a lightning geolocation system (42) indicative of the occurrence of the lightning strike (52) that satisfies at least one criterion; and
        in response to receiving both the first data indicative of the occurrence of the lightning strike (52) at the wind turbine (10) and the second data indicative of the occurrence of the lightning strike (52) that satisfies the at least one criterion, transmit an alert indicating detection of the lightning strike (52) at the wind turbine (10), wherein the lightning measurement system (17) includes:

        a lightning receptor (22) configured to receive the lightning strike (52) at the wind turbine (10);
        a down conductor (24) that operatively couples the lightning receptor (22) to an electrical ground (26); and
        a lightning sensor (28) operatively coupled to the down conductor (24) that detects the lightning strike (52) based on a current conducted by the down conductor (24), **characterized in that** the occurrence of the lightning strike (52) is determined based on one or more of a peak current, a total energy, a total electrical charge, a current rise time, and a rate of change in the current, and wherein the program code (110) further causes the system to:

            determine an intensity threshold based at least in part on one or more of the peak current, the total energy, the total electrical charge, the current rise time, and the rate of change in the current, and
            wherein the at least one criterion includes a requirement that an intensity of the lightning strike (52) indicated by the second data is above the intensity threshold.

2. The system of claim 1, wherein the at least one criterion includes a requirement that a time of occurrence of the lightning strike (52) indicated by the second data be within a time threshold of the time of occurrence of the lightning strike (52) indicated by the first data.

3. The system of claim 1 or 2, wherein the at least one criterion includes a requirement that a location of the lightning strike (52) indicated by the second data be within a distance threshold of the location of the wind turbine (10).

4. The system of claim 1, wherein the lightning sensor (28) includes at least one of a Rogowski coil and a magnetometer.

5. A method of monitoring a wind turbine (10), comprising:

receiving first data from a lightning measurement system (17) indicative of an occurrence of a lightning strike (52) at the wind turbine (10), wherein the lightning measurement system (17) includes a lightning sensor (28) operatively coupled to a lightning receptor (22) by a down conductor (24), and wherein the lightning measurement system (17) determines the occurrence of the lightning strike (52) based on one or more of a peak current, a total energy, a total electrical charge, a current rise time, and a rate of change in the current;

receiving the lightning strike (52) by the lightning receptor (22) at the wind turbine (10),

detecting the lightning strike (52) by the lightning sensor (28) based on a current conducted by the down conductor (24),

determining an intensity threshold based at least in part on one or more of the peak current, the total energy, the total electrical charge, the current rise time, and the rate of change in the current,

receiving second data from a lightning geolocation system (42) indicative of the occurrence of the lightning strike (52) that satisfies at least one criterion, wherein the at least one criterion includes a requirement that an intensity of the lightning strike (52) indicated by the second data is above the intensity threshold; and

in response to receiving both the first data indicative of the occurrence of the lightning strike (52) at the wind turbine (10) and the second data indicative of the occurrence of the lightning strike (52) that satisfies the at least one criterion, transmitting an alert indicating detection of the lightning strike (52) at the wind turbine (10).

6. The method of claim 5, wherein the at least one criterion includes a requirement that a time of occurrence of the lightning strike (52) indicated by the second data be within a time threshold of the time of occurrence of the lightning strike (52) indicated by the first data.

7. The method of claim 5 or 6, wherein the at least one criterion includes a requirement that a location of the lightning strike (52) indicated by the second data be within a distance threshold of the location of the wind turbine (10).

8. A computer program product for monitoring a wind turbine (10), comprising:

a non-transitory computer-readable storage medium; and
program code (110) stored on the non-transitory computer-readable storage medium that, when executed by one or more processors (102), causes the one or more processors (102) to:

receive first data from a lightning measurement system (17) indicative of an occurrence of a lightning strike (52) at the wind turbine (10), wherein the lightning measurement system (17) includes a lightning sensor (28) operatively coupled to a lightning receptor (22) by a down conductor (24), and wherein the lightning measurement system (17) determines the occurrence of the lightning strike (52) based on one or more of a peak current, a total energy, a total electrical charge, a current rise time, and a rate of change in the current, wherein the lightning receptor (22) is configured to receive the lightning strike (52) at the wind turbine (10), and wherein the lightning sensor (28) is configured to detect the lightning strike (52) based on a current conducted by the down conductor (24);

determine an intensity threshold based at least in part on one or more of the peak current, the total energy, the total electrical charge, the current rise time, and the rate of change in the current,

receive second data from a lightning geolocation system (42) indicative of the occurrence of the lightning strike (52) that satisfies at least one criterion, wherein the at least one criterion includes a requirement that an intensity of the lightning strike (52) indicated by the second data is above the intensity threshold; and

in response to receiving both the first data indicative of the occurrence of the lightning strike (52) at the wind turbine (10) and the second data indicative of the occurrence of the lightning strike (52) that satisfies the at least one criterion, transmit an alert indicating detection of the lightning strike (52) at the wind turbine (10).

**Patentansprüche**

1. System zum Überwachen einer Windkraftanlage (10), umfassend:

einen oder mehrere Prozessoren (102); und
einen Speicher (104), der mit dem einen oder den mehreren Prozessoren (102) gekoppelt ist und Programmcode (110) beinhaltet, der, wenn er von dem einen oder den mehreren Prozessoren (102) ausgeführt wird, das System dazu bringt:

erste Daten von einem Blitzmesssystem (17) zu empfangen, die ein Auftreten eines Blitzeinschlags (52) an der Windkraftanlage (10) angeben;

zweite Daten von einem Blitzortungssystem (42) zu empfangen, die das Auftreten des Blitzeinschlags (52), der mindestens ein Kriterium erfüllt, angeben; und

in Reaktion auf den Empfang sowohl der ersten Daten, die das Auftreten des Blitzeinschlags (52) an der Windkraftanlage (10) angeben, als auch der zweiten Daten, die das Auftreten des Blitzeinschlags (52), der das mindestens eine Kriterium erfüllt, angeben, eine Warnung zu übertragen, die die Erkennung des Blitzeinschlags (52) an der Windkraftanlage (10) angibt, wobei das Blitzmesssystem (17) beinhaltet:

einen Blitzempfänger (22), der dazu konfiguriert ist, den Blitzeinschlag (52) an der Windkraftanlage (10) zu empfangen;

einen Ableiter (24), der den Blitzempfänger (22) wirkmäßig mit einer elektrischen Masse (26) koppelt; und

einen wirkmäßig mit dem Ableiter (24) gekoppelten Blitzsensor (28), der den Blitzeinschlag (52) auf Basis eines durch den Ableiter (24) geleiteten Stroms erkennt, **dadurch gekennzeichnet, dass** das Auftreten des Blitzeinschlags (52) auf Basis eines oder mehrerer von einem Spitzenstrom, einer Gesamtenergie, einer elektrischen Gesamtladung, einer Stromanstiegszeit und einer Änderungsrate des Stroms bestimmt wird, und wobei der Programmcode (110) das System weiter dazu bringt:

einen Intensitätsschwellenert mindestens zum Teil auf Basis eines oder mehrerer des Spitzenstroms, der Gesamtenergie, der elektrischen Gesamtladung, der Stromanstiegszeit und der Änderungsrate des Stroms zu bestimmen, und wobei das mindestens eine Kriterium eine Anforderung beinhaltet, dass eine Intensität des durch die zweiten Daten angegebenen Blitzeinschlags (52) über dem Intensitätsschwellenwert liegt.

2. System nach Anspruch 1, wobei das mindestens eine Kriterium eine Anforderung beinhaltet, dass ein Zeitpunkt des Auftretens des durch die zweiten Daten angegebenen Blitzeinschlags (52) innerhalb eines Zeitschwellenwerts des Zeitpunkts des Auftretens des durch die ersten Daten angegebenen Blitzeinschlags (52) liegt.

3. System nach Anspruch 1 oder 2, wobei das mindestens eine Kriterium eine Anforderung beinhaltet, dass ein Ort des durch die zweiten Daten angegebenen Blitzeinschlags (52) innerhalb eines Entfernungsschwellenwerts vom Ort der Windkraftanlage (10) liegt.

4. System nach Anspruch 1, wobei der Blitzsensor (28) mindestens eines von einer Rogowski-Spule und einem Magnetometer beinhaltet.

5. Verfahren zum Überwachen einer Windkraftanlage (10), umfassend:

Empfangen von ersten Daten von einem Blitzmesssystem (17), die ein Auftreten eines Blitzeinschlags (52) an der Windkraftanlage (10) angeben, wobei das Blitzmesssystem (17) einen Blitzsensor (28) beinhaltet, der über einen Ableiter (24) wirkmäßig mit einem Blitzempfänger (22) gekoppelt ist, und wobei das Blitzmesssystem (17) das Auftreten des Blitzeinschlags (52) auf Basis eines oder mehrerer von einem Spitzenstrom, einer Gesamtenergie, einer elektrischen Gesamtladung, einer Stromanstiegszeit und einer Änderungsrate des Stroms bestimmt;

Empfangen des Blitzeinschlags (52) durch den Blitzempfänger (22) an der Windkraftanlage (10),

Erkennen des Blitzeinschlags (52) durch den Blitzsensor (28) auf Basis eines durch den Ableiter (24) geleiteten Stroms,

Bestimmen eines Intensitätsschwellenwerts mindestens zum Teil auf Basis eines oder mehrerer des Spitzenstroms, der Gesamtenergie, der elektrischen Gesamtladung, der Stromanstiegszeit und der Änderungsrate des Stroms,

Empfangen von zweiten Daten von einem Blitzortungssystem (42), die das Auftreten des Blitzeinschlags (52) angeben, der mindestens ein Kriterium erfüllt, wobei das mindestens eine Kriterium eine Anforderung beinhaltet, dass eine Intensität des durch die zweiten Daten angegebenen Blitzeinschlags (52) über dem Intensitätsschwellenwert liegt; und

in Reaktion auf den Empfang sowohl der ersten Daten, die das Auftreten des Blitzeinschlags (52) an der Windkraftanlage (10) angeben, als auch der zweiten Daten, die das Auftreten des Blitzeinschlags (52), der das mindestens eine Kriterium erfüllt, angeben, Übertragen einer Warnung, die die Erkennung des Blitzeinschlags (52) an der Windkraftanlage (10) angibt.

**6.** Verfahren nach Anspruch 5, wobei das mindestens eine Kriterium eine Anforderung beinhaltet, dass ein Zeitpunkt des Auftretens des durch die zweiten Daten angegebenen Blitzeinschlags (52) innerhalb eines Zeitschwellenwerts des Zeitpunkts des Auftretens des durch die ersten Daten angegebenen Blitzeinschlags (52) liegt.

**7.** Verfahren nach Anspruch 5 oder 6, wobei das mindestens eine Kriterium eine Anforderung beinhaltet, dass ein Ort des durch die zweiten Daten angegebenen Blitzeinschlags (52) innerhalb eines Entfernungsschwellenwerts vom Ort der Windkraftanlage (10) liegt.

**8.** Computerprogrammprodukt zum Überwachen einer Windkraftanlage (10), umfassend:

ein nichtflüchtiges computerlesbares Speichermedium; und
Programmcode (110), der auf dem nichtflüchtigen computerlesbaren Speichermedium gespeichert ist und der, wenn er von einem oder mehreren Prozessoren (102) ausgeführt wird, den einen oder die mehreren Prozessoren (102) dazu bringt:

erste Daten von einem Blitzmesssystem (17) zu empfangen, die ein Auftreten eines Blitzeinschlags (52) an der Windkraftanlage (10) angeben, wobei das Blitzmesssystem (17) einen Blitzsensor (28) beinhaltet, der über einen Ableiter (24) wirkmäßig mit einem Blitzempfänger (22) gekoppelt ist, und wobei das Blitzmesssystem (17) das Auftreten des Blitzeinschlags (52) auf Basis eines oder mehrerer von einem Spitzenstrom, einer Gesamtenergie, einer elektrischen Gesamtladung, einer Stromanstiegszeit und einer Änderungsrate des Stroms bestimmt, wobei der Blitzempfänger (22) dazu konfiguriert ist, den Blitzeinschlag (52) an der Windkraftanlage (10) zu empfangen, und wobei der Blitzsensor (28) dazu konfiguriert ist, den Blitzeinschlag (52) auf Basis eines durch den Ableiter (24) geleiteten Stroms zu erkennen; einen Intensitätsschwellenert mindestens zum Teil auf Basis eines oder mehrerer des Spitzenstroms, der Gesamtenergie, der elektrischen Gesamtladung, der Stromanstiegszeit und der Änderungsrate des Stroms zu bestimmen, zweite Daten von einem Blitzortungssystem (42) zu empfangen, die das Auftreten des Blitzeinschlags (52), der mindestens ein Kriterium erfüllt, angeben, wobei das mindestens eine Kriterium eine Anforderung beinhaltet, dass eine Intensität des durch die zweiten Daten angegebenen Blitzeinschlags (52) über dem Intensitätsschwellenwert liegt; und
in Reaktion auf den Empfang sowohl der ersten Daten, die das Auftreten des Blitzeinschlags (52) an der Windkraftanlage (10) angeben, als auch der zweiten Daten, die das Auftreten des Blitzeinschlags (52), der das mindestens eine Kriterium erfüllt, angeben, eine Warnung zu übertragen, die die Erkennung des Blitzeinschlags (52) an der Windkraftanlage (10) angibt.

**Revendications**

**1.** Système de surveillance d'une éolienne (10), comprenant :

un ou plusieurs processeurs (102) ; et
une mémoire (104) couplée aux un ou plusieurs processeurs (102) et incluant un code de programme (110) qui, lorsqu'il est exécuté par les un ou plusieurs processeurs (102), amène le système à :

recevoir des premières données provenant d'un système de mesure de la foudre (17) indiquant une occurrence d'un coup de foudre (52) sur l'éolienne (10) ;
recevoir des secondes données d'un système de géolocalisation de la foudre (42) indiquant l'occurrence du coup de foudre (52) qui satisfait à au moins un critère ; et
en réponse à la réception à la fois des premières données indiquant l'occurrence du coup de foudre (52) sur l'éolienne (10) et des secondes données indiquant l'occurrence du coup de foudre (52) qui satisfait au au moins un critère, transmettre une alerte indiquant la détection du coup de foudre (52) sur l'éolienne (10), dans lequel le système de mesure de la foudre (17) inclut :

un récepteur de foudre (22) configuré pour recevoir le coup de foudre (52) sur l'éolienne (10) ;
un conducteur de descente (24) qui couple de manière opérationnelle le récepteur de foudre (22) à une terre électrique (26) ; et
un capteur de foudre (28) couplé de manière opérationnelle au conducteur de descente (24) qui détecte le coup de foudre (52) sur la base d'un courant conduit par le conducteur de descente (24), **caractérisé en ce que** l'occurrence du coup de foudre (52) est déterminée sur la base d'un ou plusieurs éléments parmi un courant de crête, une énergie totale, une charge électrique totale, un temps de montée du courant et une vitesse de variation du courant, et dans lequel le code de programme (110) amène en outre le système à :

déterminer un seuil d'intensité sur la base d'au moins en partie un ou plusieurs éléments parmi le courant de crête, l'énergie totale, la charge électrique totale, le temps de montée du courant et la vitesse de variation du courant, et dans lequel le au moins un critère inclut une exigence selon laquelle l'intensité du coup de foudre (52) indiquée par les secondes données est supérieure au seuil d'intensité.

2. Système selon la revendication 1, dans lequel le au moins un critère inclut une exigence selon laquelle un moment d'occurrence du coup de foudre (52) indiqué par les secondes données est dans un seuil de temps du moment d'occurrence du coup de foudre (52) indiqué par les premières données.

3. Système selon la revendication 1 ou 2, dans lequel le au moins un critère inclut une exigence selon laquelle un emplacement du coup de foudre (52) indiqué par les secondes données se trouve dans un seuil de distance de l'emplacement de l'éolienne (10).

4. Système selon la revendication 1, dans lequel le capteur de foudre (28) inclut au moins l'un parmi une bobine de Rogowski et un magnétomètre.

5. Procédé de surveillance d'une éolienne (10), comprenant :

la réception de premières données d'un système de mesure de la foudre (17) indiquant une occurrence d'un coup de foudre (52) sur l'éolienne (10), dans lequel le système de mesure de la foudre (17) inclut un capteur de foudre (28) couplé de manière opérationnelle à un récepteur de foudre (22) par un conducteur de descente (24), et dans lequel le système de mesure de la foudre (17) détermine l'occurrence du coup de foudre (52) sur la base d'un ou plusieurs éléments parmi un courant de crête, une énergie totale, une charge électrique totale, un temps de montée du courant et une vitesse de variation du courant ;
la réception du coup de foudre (52) par le récepteur de foudre (22) sur l'éolienne (10),
la détection du coup de foudre (52) par le capteur de foudre (28) sur la base d'un courant conduit par le conducteur de descente (24),
la détermination d'un seuil d'intensité sur la base d'au moins en partie un ou plusieurs éléments parmi le courant de crête, l'énergie totale, la charge électrique totale, le temps de montée du courant et la vitesse de variation du courant, la réception de secondes données d'un système de géolocalisation de la foudre (42) indiquant l'occurrence du coup de foudre (52) qui satisfait à au moins un critère, dans lequel le au moins un critère inclut une exigence selon laquelle une intensité du coup de foudre (52) indiqué par les secondes données est supérieure au seuil d'intensité ; et
en réponse à la réception à la fois des premières données indiquant l'occurrence du coup de foudre (52) sur l'éolienne (10) et des secondes données indiquant l'occurrence du coup de foudre (52) qui satisfait au au moins un critère, la transmission d'une alerte indiquant la détection du coup de foudre (52) sur l'éolienne (10).

6. Procédé selon la revendication 5, dans lequel le au moins un critère inclut une exigence selon laquelle un moment d'occurrence du coup de foudre (52) indiqué par les secondes données est dans un seuil de temps du moment d'occurrence du coup de foudre (52) indiqué par les premières données.

7. Procédé selon la revendication 5 ou 6, dans lequel le au moins un critère inclut une exigence selon laquelle un emplacement du coup de foudre (52) indiqué par les secondes données se trouve dans un seuil de distance de l'emplacement de l'éolienne (10).

8. Produit de programme informatique pour surveiller une éolienne (10), comprenant :

un support de stockage non transitoire lisible par ordinateur ; et
un code de programme (110) stocké sur le support de stockage non transitoire lisible par ordinateur qui, lorsqu'il est exécuté par un ou plusieurs processeurs (102), amène les un ou plusieurs processeurs (102) à :

recevoir des premières données d'un système de mesure de la foudre (17) indiquant une occurrence d'un coup de foudre (52) sur l'éolienne (10), dans lequel le système de mesure de la foudre (17) inclut un capteur de foudre (28) couplé de manière opérationnelle à un récepteur de foudre (22) par un conducteur de descente (24), et dans lequel le système de mesure de la foudre (17) détermine l'occurrence du coup de foudre (52) sur la base d'un ou plusieurs éléments parmi un courant de crête, une énergie totale, une charge électrique totale, un temps de montée du courant et une vitesse de variation du courant, dans lequel le récepteur de foudre (22) est configuré pour recevoir le coup de foudre (52) sur l'éolienne (10), et dans lequel le capteur de foudre (28) est configuré pour détecter le coup de foudre (52) sur la base d'un courant conduit par le conducteur de descente (24) ;

déterminer un seuil d'intensité sur la base d'au moins en partie un ou plusieurs éléments parmi le courant de crête, l'énergie totale, la charge électrique totale, le temps de montée du courant et la vitesse de variation du courant,

recevoir des secondes données d'un système de géolocalisation de la foudre (42) indiquant l'occurrence du coup de foudre (52) qui satisfait à au moins un critère, dans lequel le au moins un critère inclut une exigence selon laquelle une intensité du coup de foudre (52) indiqué par les secondes données est supérieure au seuil d'intensité ; et

en réponse à la réception à la fois des premières données indiquant l'occurrence du coup de foudre (52) sur l'éolienne (10) et des secondes données indiquant l'occurrence du coup de foudre (52) qui satisfait au au moins un critère, transmettre une alerte indiquant la détection du coup de foudre (52) sur l'éolienne (10).

FIG. 1

FIG. 2

EP 4 359 669 B1

FIG. 3

START

*80*

*82*

RECEIVE GEOLOCATION
LIGHTNING DATA

*84*

MATCHING
CRITERIA SATISFIED
?

NO

YES

*86*

COMPARE GEOLOCATION
LIGHTNING DATA AND
SENSOR LIGHTNING DATA

*88*

MATCHING
CRITERIA SATISFIED
?

NO

*90*

NO ALERT

YES

*92*

RECORD/TRANSMIT ALERT

# FIG. 4

*100*

COMPUTER

*104*

MEMORY

*110*

APPLICATION

*112*

DATA
STRUCTURE

*114*

DATABASE

*108*

HMI

*102*

PROCESSOR

*106*

IO
INTERFACE

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011118982 A1
- US 9450392 B
- US 9835141 B
- US 10649018 B